# EUROPEAN PATENT SPECIFICATION

(11) **EP 2 933 622 B1**
(45) Date of publication and mention of the grant of the patent: **06.11.2019**
(21) Application number: 14164881.6
(22) Date of filing: 16.04.2014
(51) Int. Cl.: G01M 3/02

(54) **Tube Sealing Apparatus**
Rohrversiegelungsvorrichtung
Appareil de scellage de tube

(43) Date of publication of application: 21.10.2015
(73) Proprietor: IK-UK Limited, Co Durham DL5 6SH (GB)
(72) Inventor: Robinson, Paul Edward, Cleveland TS10 4RB (GB); Arnold, Robin Michael, Catterick Village Richmond DL10 7NE (GB)
(74) Representative: Murgitroyd & Company

(56) References cited:
- EP-A1- 0 682 204
- EP-A2- 0 872 680
- DE-A1- 3 931 568
- FR-A1- 2 989 142
- GB-A- 2 287 080
- US-A- 3 946 761
- US-A1- 2010 170 682

## Description

The present invention relates to a tube sealing apparatus, and relates particularly, but not exclusively, to a tube sealing apparatus for use in weld testing.

It is known to test welds in tubes or pipes by sealing part of the pipe by means of sealing apparatus and then pressurising the sealed part of a pipe.

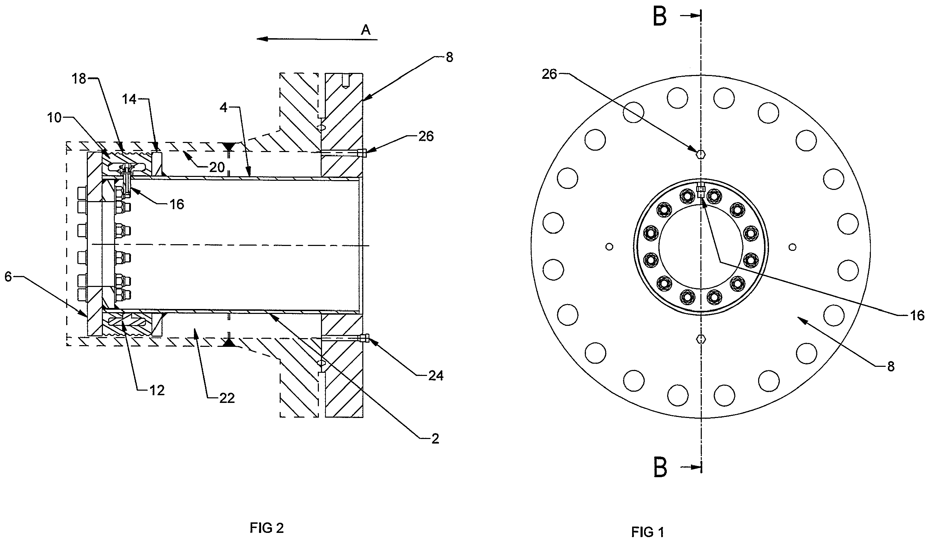

A known type of tube sealing apparatus is shown in Figures 1 and 2. The tube sealing apparatus 2 has a tubular body 4 and end flanges 6, 8 at each end of the tubular body 4. An inflatable tyre 10 of polymeric material such as polyurethane defines an annular chamber 12 and is mounted between end flange 6 and a support flange 14. The tyre 10 is inflated by means of pressurised fluid such as water passing along a conduit 16 into hollow chamber 12 in the tyre 10 until external peripheral surface 18 of the tyre 10 comes into sealing engagement with an inner wall 20 of a pipe to be tested. Weld testing of the pipe is then carried out by filling annular region 22 bounded by the pipe inner wall, 20, end flange 8 and tubular body 4 by pressurised fluid such as water through inlet 24, causing air to be vented from the annular chamber 22 through outlet 26.

This arrangement suffers from the drawback that as the pressure of fluid inside the pipe increases, deformation of the tyre 10 occurs, as a result of which the sealing effect of the tyre 10 can be overcome and in some cases the tyre may be extruded out of its position around the tubular body 4 of the apparatus 2.

A further known tube sealing apparatus, which can operate at higher pressures than the arrangement of Figure 1, has a body of elastomeric material, the diameter of which increases as the body is axially compressed by means of plates connected by a screw thread. This causes the body to come into sealing contact with an inner wall of the tube. However, although this type of sealing apparatus can operate at higher pressures than the apparatus shown in Figure 1, the range of tube diameters and surface conditions over which the apparatus can operate is relatively narrow. In particular, it is problematic to form a seal with a pipe having a pitted internal surface.

DE 39 31 568 A1 discloses a sealing apparatus having a tubular body having inflatable pipe seals at each end mounted on annual end plates. Inflation of the seals seals a pipe into which the apparatus is inserted.

EP 0 682 204 discloses device for blocking the bore of a pipe or main comprising an inflatable bag for movement along the bore of the pipe from an access point in the pipe to a point where the bore is to be blocked, means for moving the bag along the pipe or main to the point where the bore is to be blocked and means for inflating the bag with a fluid.

Preferred embodiments of the present invention seek to overcome one or more of the above disadvantages of the prior art.

According to the present invention, there is provided a sealing apparatus for sealing a tube as defined in claim 1.

By providing support means including at least one first support member adapted to be urged towards the inner surface of the tube by means of pressurised fluid to resist disengagement of the tube sealing means from the inner surface by means of pressurised fluid in the tube, this provides the advantage of enabling the sealing apparatus to operate at higher pressures than the known inflatable device and over a wider range of tube diameters and tube surface conditions than the known non-inflatable device.

The tube sealing means and/or at least one said first support member is adapted to be inflated by means of pressurised fluid.

The tube sealing means includes at least one inflatable member having a first hardness and at least one said first support member may have a second hardness, wherein said second hardness is greater than said first hardness.

This provides the advantage of enabling the first inflatable member and first support member to be constructed with similar dimensions, thereby making the apparatus easier to manufacture and use.

The support means may further comprise at least one second support member arranged in use on a side of said tube sealing means remove from at least one said first support member.

The apparatus may further comprise at least one first conduit for causing pressurised fluid to urge said tube sealing means into sealing engagement with said inner surface.

The apparatus may further comprise at least one second conduit for causing pressurised fluid to urge at least one said first support member towards said inner surface.

The tube sealing means may surround a tubular body of the apparatus.

A preferred embodiment of the invention will now be described, by way of example only and not in any limitative sense, with reference to the accompanying drawings, in which:-
Figure 1 is an end view of a known inflatable pipe sealing apparatus, in the direction of arrow A in Figure 2;
Figure 2 is a cross-sectional view along the line B-B in Figure 1;
Figure 3 is an end view of a pipe sealing apparatus embodying the present invention, in the direction of arrow C in Figure 4;
Figure 4 is a cross-sectional view along the line D-D in Figure 3; and
Figure 5 is a view of the apparatus of Figure 4 in the direction of arrow E in Figure 4.

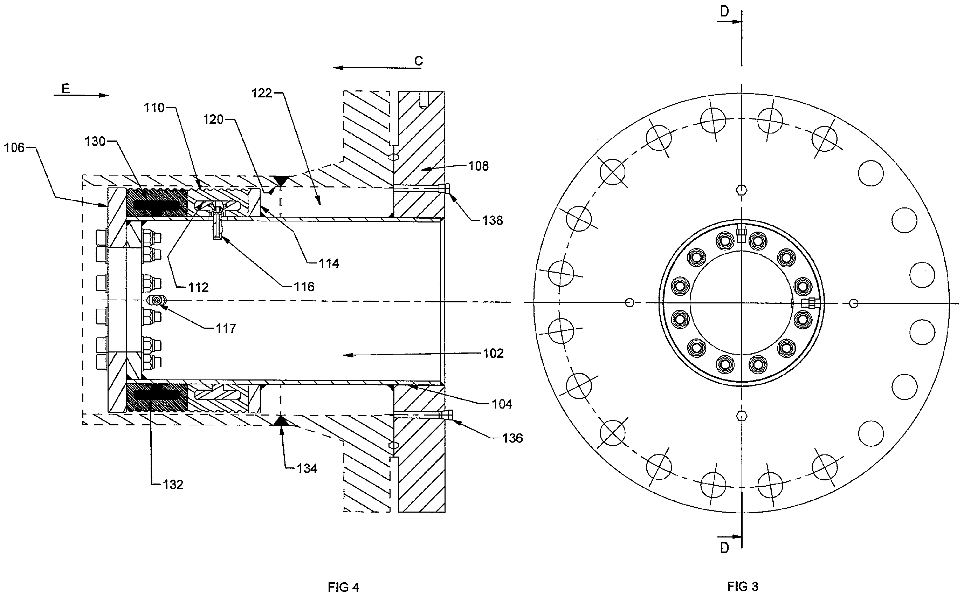

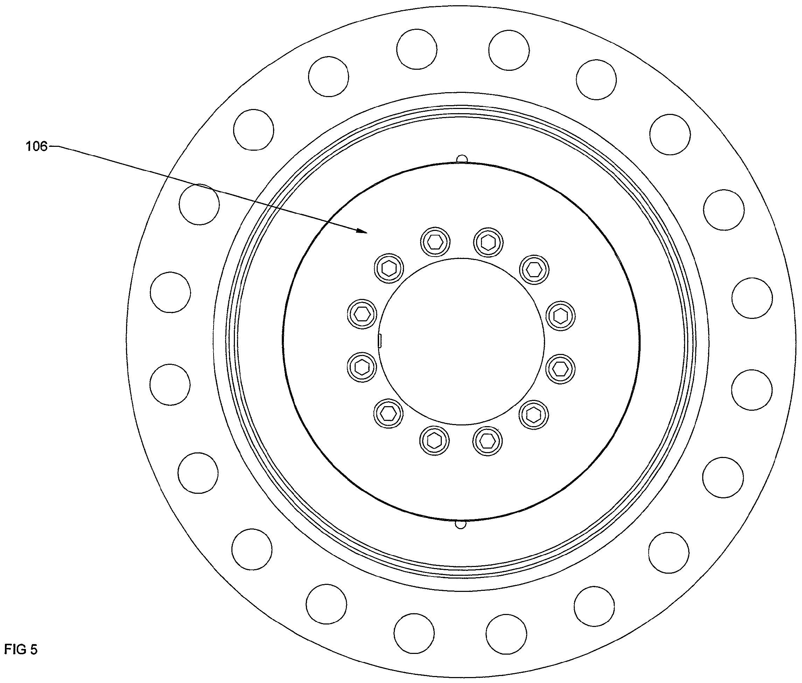

Referring to Figures 3 to 5, a tube sealing apparatus 102 embodying the present invention has a tubular body 104 and end flanges 106, 108 at each end of the tubular body 104. Tube sealing means in the form of a first inflatable tyre 110 of polymeric material such as polyurethane of a first hardness surrounds the tubular body 104 and abuts a support flange 114. The first tyre 110 defines an annular chamber 112 connected via a first conduit 116 to a source of pressurised fluid to enable the pressurised fluid to inflate the first tyre 110 to bring it into sealing contact with an inner wall 120 of a pipe to be tested.

Support means in the form of a second inflatable tyre 130 of polymeric material such as polyurethane of a second hardness, higher than the first hardness of the first tyre 110, surrounds the tubular body 104 and abuts the first tyre 110 on one side and the end flange 106 on the other side. The second tyre 130 defines an annular chamber 132 connected via a second conduit 117 to a source of pressurised fluid to enable the pressurised fluid to inflate the second tyre 130 so that it moves towards the inner wall 120 of the pipe to be tested, but does not form a seal with the inner wall 120. The second tyre 130 acts as a support to resist removal of the first tyre 110 from its sealing engagement with the inner wall 120 when annular region 122 bounded by the tubular body 104, inner wall 120 and end flange 108 is filled with pressurised fluid such as water via inlet 136 and air is vented through outlet 138.The annular region 122 contains a weld 134 to be tested.

The operation of the apparatus 102 shown in Figures 3 to 5 will now be described.

The apparatus 102 is initially inserted into the tube with the first 110 and second 130 tyres in their respective deflated states, so that the apparatus 102 has smaller diameter than the tube and can easily be located therein. The tyres 110, 130 are then inflated via their respective conduits 116, 117 such that the first tyre 110 sealingly engages the internal wall 120 of the tube, and the second tyre 130 provides a support to resist extrusion of the first tyre 110 out of its position between the support flange 114 and second tyre 130 as a result of pressurised fluid in the tube.

It will be appreciated by persons skilled in the art that the above embodiment has been described by way of example only, and not in any limitative sense, and that various alterations and modifications are possible without departure from the scope of the invention as defined by the appended claims. For example, a section of tube can be isolated by means of a further apparatus 102 of the invention, or a further embodiment of the apparatus 102 in which further first 110 and second 130 tyres are arranged at the opposite end of the tubular body 104 from those shown in Figure 2. When the section of the tube has been sealed, the interior of the pipe can be pressurised by means of pressurised water through a suitable conduit (not shown).

## Claims

1. A sealing apparatus (102) for sealing a tube, the apparatus comprising:-
tube sealing means (110) adapted to be inflated by means of pressurised fluid to be urged into sealing engagement with an inner surface (120) of a tube;
**characterised in that** the apparatus further comprises support means including at least one first support member (130) adapted to be inflated by means of pressurised fluid to be urged towards said inner surface (120) to resist disengagement of said tube sealing means (110) from said inner surface (120) by means of pressurised fluid in said tube;
and **in that** said tube sealing means (110) includes at least one inflatable member having a first hardness and said first support member (130) has a second hardness, wherein said second hardness is greater than said first hardness.

2. An apparatus according to any one of the preceding claims, wherein said support means (130) further comprises at least one second support member arranged in use on a side of said tube sealing means (110) removed from at least one said first support member (130).

3. An apparatus according to any one of the preceding claims, further comprising at least one first conduit (116) for causing pressurised fluid to urge said tube sealing means (110) into sealing engagement with said inner surface (120).

4. An apparatus according to any one of the preceding claims, further comprising at least one second conduit 117) for causing pressurised fluid to urge said at least one said first support member (130) towards said inner surface (120).

5. An apparatus according to any one of the preceding claims, wherein said tube sealing means (110) surrounds a tubular body (104) of the apparatus.

## Patentansprüche

1. Eine Dichtungsvorrichtung (102) zum Abdichten eines Rohrs, wobei die Vorrichtung Folgendes beinhaltet:
ein Rohrdichtungsmittel (110), das angepasst ist, um mittels unter Druck stehender Flüssigkeit aufgepumpt zu werden, um mit einer Innenfläche (120) eines Rohrs in abdichtenden Eingriff getrieben zu werden;
**dadurch gekennzeichnet, dass** die Vorrichtung ferner ein Stützmittel beinhaltet, umfassend mindestens ein erstes Stützelement (130), das angepasst ist, um mittels unter Druck stehender Flüssigkeit aufgepumpt zu werden, um in Richtung der Innenfläche (120) getrieben zu werden, um dem Lösen des Eingriffs des Rohrdichtungsmittels (110) von der Innenfläche (120) mittels unter Druck stehender Flüssigkeit in dem Rohr zu widerstehen;
und dadurch, dass das Rohrdichtungsmittel (110) mindestens ein aufpumpbares Element, das einen ersten Härtegrad aufweist, umfasst und das erste Stützelement (130) einen zweiten Härtegrad aufweist, wobei der zweite Härtegrad größer ist als der erste Härtegrad.

2. Vorrichtung gemäß einem der vorhergehenden Ansprüche, wobei das Stützmittel (130) ferner mindestens ein zweites Stützelement beinhaltet, das bei Gebrauch auf einer Seite des Rohrdichtungsmittels (110) angeordnet ist, entfernt von mindestens einem derartigen ersten Stützelement (130) gelegen.

3. Vorrichtung gemäß einem der vorhergehenden Ansprüche, ferner beinhaltend mindestens eine erste Leitung (116), die bewirkt, dass die unter Druck stehende Flüssigkeit das Rohrdichtungsmittel (110) mit der Innenfläche (120) in abdichtenden Eingriff treibt.

4. Vorrichtung gemäß einem der vorhergehenden Ansprüche, ferner beinhaltend mindestens eine zweite Leitung (117), die bewirkt, dass die unter Druck stehende Flüssigkeit das mindestens eine erste Stützelement (130) in Richtung der Innenfläche (120) treibt.

5. Vorrichtung gemäß einem der vorhergehenden Ansprüche, wobei das Rohrdichtungsmittel (110) einen rohrförmigen Körper (104) der Vorrichtung umgibt.

## Revendications

1. Un appareil de scellement (102) pour sceller un tube, l'appareil comprenant :
un moyen de scellement de tube (110) conçu pour être gonflé au moyen de fluide sous pression devant être poussé dans une mise en prise par scellement avec une surface interne (120) d'un tube ;
**caractérisé en ce que** l'appareil comprend en outre un moyen de support incluant au moins un premier élément de support (130) conçu pour être gonflé au moyen de fluide sous pression devant être poussé vers ladite surface interne (120) afin de résister à un désengagement dudit moyen de scellement de tube (110) de ladite surface interne (120) au moyen de fluide sous pression dans ledit tube ;
et **en ce que** ledit moyen de scellement de tube (110) inclut au moins un élément gonflable ayant une première dureté et ledit premier élément de support (130) a une deuxième dureté, ladite deuxième dureré étant supérieure à ladite première dureté.

2. Un appareil selon l'une quelconque des revendications précédentes, dans lequel ledit moyen de support (130) comprend en outre au moins un deuxième élément de support agencé lors de l'utilisation sur un côté dudit moyen de scellement de tube (110) retiré d'au moins un dit premier élément de support (130).

3. Un appareil selon l'une quelconque des revendications précédentes, comprenant en outre au moins un premier conduit (116) pour amener du fluide sous pression à pousser ledit moyen de scellement de tube (110) dans une mise en prise par scellement avec ladite surface interne (120).

4. Un appareil selon l'une quelconque des revendications précédentes, comprenant en outre au moins un deuxième conduit (117) pour amener du fluide sous pression à pousser ledit au moins un dit premier élément de support (130) vers ladite surface interne (120).

5. Un appareil selon l'une quelconque des revendications précédentes, dans lequel ledit moyen de scellement de tube (110) entoure un corps tubulaire (104) de l'appareil.
